# EUROPEAN PATENT APPLICATION

(11) **EP 4 464 921 A1**
(43) Date of publication of application: **20.11.2024**
(21) Application number: 24175649.3
(22) Date of filing: 14.05.2024
(51) Int. Cl.: F16L 9/22, B65D 88/06, B29C 65/00, E04C 2/20

(54) **STRUCTURAL PROFILE JOINT, PIPE, WALL, AND CONTAINER**

(30) Priority: 15.05.2023 FI 20235550
(71) Applicant: Spectro Plast Oy, 39700 Parkano (FI)
(72) Inventor: Kirjonen, Janne, 39700 Parkano (FI)
(74) Representative: Kolster Oy Ab

(57) **Abstract**

A structural profile joint (10) which comprises a first structural profile (10A, 12A) which comprises an outer wall (102) and plastic as material. Furthermore, the structural profile joint comprises a second structural profile (10B, 12B) to be fastened to the first structural profile (10A, 12A), which second structural profile (10B, 12B) comprises an outer wall (102) and plastic as material. The first structural profile (10A, 12A) comprises a fastener (110) shaped from its outer wall (102) and the second structural profile (10B, 12B) comprises a counter-fastener (120) shaped from its outer wall (102) corresponding to the fastener (110) of the first structural profile (10A, 12A) for positioning the first structural profile (10A, 12A) and the second structural profile (10B, 12B) in relation to each other. The fastener (110) of the first structural profile (10A, 12A) comprises a curved shape, and the counter-fastener (120) of the second structural profile (10B, 12B) comprises a curved shape allowing for the rotation between the first structural profile (10A, 12A) and the second structural profile (10B, 12B). The first structural profile (10A, 12A) and the second structural profile (10B, 12B) are configured to be welded fast together for locking the rotation between the first structural profile (10A, 12A) and the second structural profile (10B, 12B).

## Description

### Background of the invention

The invention relates to a structural profile joint and particularly its plastic structural profiles.

For forming a preferred structure, the elongated sides of structural profiles can be fastened to each other by e.g. welding.

However, a problem with structural profiles fastened from their elongated sides is e.g. that dimensional inaccuracies in the structural profiles slow down or even prevent the forming of the preferred structure.

### Brief description of the invention

It is an object of the invention to provide a new type of a structural profile joint. The solution according to the invention is characterized by what is disclosed in the independent claims.

The presented structural profile joint comprises a first structural profile which comprises an outer wall and plastic as material. Furthermore, the structural profile joint comprises a second structural profile to be fastened to the first structural profile, which second structural profile comprises an outer wall and plastic as material. Additionally, the first structural profile comprises a fastener shaped from its outer wall, and the second structural comprises its counter-fastener shaped from its outer wall corresponding to the fastener of the first structural profile for positioning the first structural profile and the second structural profile in relation to each other. In addition, the fastener of the first structural profile comprises a curved shape, and the counter-fastener of the second structural profile comprises a curved shape allowing for the rotation between the first structural profile and the second structural profile. Furthermore, the first structural profile and the second structural profile are configured to be welded fast together for locking the rotation between the first structural profile and the second structural profile.

The presented structural profile joint allows for such a connection between the structural profiles that positions the structural profiles in relation to each other but allows for the rotation between the structural profiles before the locking of the structural profiles in relation to each other. If the structural profile comprises e.g. dimensional inaccuracies, said dimensional inaccuracies can be compensated by means of the rotation between the structural profiles.

A presented pipe can be easily shaped to a preferred size by using the same structural profiles because the structural profiles are positionable in relation to each other.

A presented wall can be easily shaped into a preferred direction in relation to the ground level because the structural profiles are positionable in relation to each other.

A presented container can be easily formed by means of walls installable at the opposite ends of its cylindrical frame because the wall can be formed considering dimensional inaccuracies existing in said ends.

Some embodiments of the invention are presented in the dependent claims.

### Brief description of the drawings

The invention will now be described in closer detail in connection with preferred embodiments and with reference to the accompanying drawings, in which
Figure 1 schematically shows a first structural profile of a structural profile joint,
Figure 2 schematically shows a structural profile joint,
Figure 3 schematically shows a second structural profile joint,
Figure 4 schematically shows the structural profile joint of Figure 2 arranged as a pipe,
Figure 5 schematically shows the structural profile joint of Figure 2 arranged as a wall, and
Figure 6 schematically shows the structural profile joint of Figure 2 arranged as a container.

### Detailed description of the invention

A structural profile joint 10 is intended for forming various structures. The formable structure can be e.g. a pipe, a gas pipe, a chemical pipe, a pneumatic pipe, a cooling pipe, a heating pipe, a thermoplastic pipe, a cylindrical pipe, a container, or a wall. Structures to be formed of the structural profiles are described later in detail.

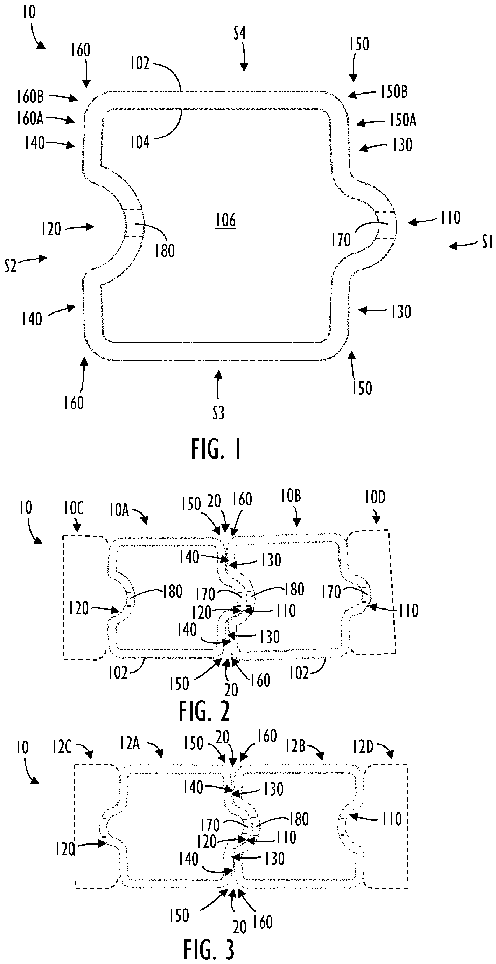

Figure 1 shows a structural profile joint 10 and its first structural profile 10A. Figure 2 shows the structural profile joint 10 which comprises a first structural profile 10A and a second structural profile 10B, which said structural profiles can be connected to each other. Furthermore, the first structural profile 10A can be connected to a preceding structural profile 10C which can be the same structural profile as the second structural profile 10B. Additionally, the second structural profile 10B can be connected to a following structural profile 10D which can be the same structural profile as the first structural profile 10A. The first structural profile 10A and the second structural profile 10B of Figure 2 are identical of their appearance, whereby it is possible to form different structures by using the same structural profile.

Figure 3 shows a structural profile joint 10 which comprises a first structural profile 12A and a second structural profile 12B, which said structural profiles can be connected to each other. In addition, the first structural profile 12A can be connected to a preceding structural profile 12C which can be the same structural profile as the second structural profile 12B. Additionally, the second structural profile 12B can be connected to a following structural profile 12D which can be the same structural profile as the first structural profile 12A. The first structural profile 12A and the second structural profile 12B of Figure 3 are different of their appearance, whereby it is possible to form different structures by using the first structural profile and the second structural profile as pairs.

The structural profile joint 10 of the figures comprises a first structural profile 10A, 12A which comprises an outer wall 102 and plastic as material. Furthermore, the structural profile joint comprises a second structural profile 10B, 12B to be fastened to the first structural profile 10A, 12A, which second structural profile 10B, 12B comprises an outer wall 102 and plastic as material. Additionally, the first structural profile 10A, 12A comprises a fastener 110 shaped from its outer wall 102. In addition, the second structural profile 10B, 12B comprises a counter-fastener 120 shaped from its outer wall 102 corresponding to the fastener 110 of the first structural profile 10A, 12A for positioning the first structural profile 10A, 12A and the second structural profile 10B, 12B in relation to each other. Furthermore, the fastener 110 of the first structural profile 10A, 12A comprises a curved shape, and the counter-fastener 120 of the second structural profile 10B, 12B comprises a curved shape allowing for the rotation between the first structural profile 10A, 12A and the second structural profile 10B, 12B. Additionally, the first structural profile 10A, 12A and the second structural profile 10B, 12B are configured to be welded fast together for locking the rotation between the first structural profile 10A, 12A and the second structural profile 10B, 12B.

The first structural profile of the figures is an elongated piece manufactured of plastic, the elongated sides of which form for the first structural profile its outer wall 102, or in other words, when viewed in the cross section of the first structural profile, the outmost wall forms for the structural profile its outer wall 102. The width and height formed of the outer wall of the first structural profile can be e.g. 50-300 mm, 80-200 mm, 90-150 mm, or 100-120 mm. The plastic material of the first structural profile can be e.g. PE, PP, PVDF, and/or PVC plastic. The first structural profile can be manufactured e.g. by extrusion. The material of the first structural profile allows for its welding to the second structural profile.

The second structural profile of the figures is an elongated piece manufactured of plastic, the elongated sides of which form for the second structural profile its outer wall 102, or in other words, when viewed in the cross section of the second structural profile, the outmost wall forms for the structural profile its outer wall 102. The width and height formed of the outer wall of the second structural profile can be e.g. 50-300 mm, 80-200 mm, 90-150 mm, or 100-120 mm. The plastic material of the first structural profile can be e.g. PE, PP, PVDF, and/or PVC plastic. The second structural profile can be manufactured e.g. by extrusion. The material of the second structural profile allows for its welding to the first structural profile.

The fastener 110 of the first structural profile of the figures is shaped from its outer wall 102. A purpose of said fastener 110 is to facilitate the positioning between the first structural profile and the second structural profile by keeping the second structural profile in its position in relation to the first structural profile. In more detail, said fastener 110 positions the first structural profile and the second structural profile in relation to each other parallel in the longitudinal direction.

The counter-fastener 120 of the second structural profile of the figures is shaped from its outer wall 102. A purpose of said counter-fastener 120 is to facilitate the positioning between the first structural profile and the second structural profile by keeping the second structural profile in its position in relation to the first structural profile. In more detail, said counter-fastener 120 positions the first structural profile and the second structural profile in relation to each other parallel in the longitudinal direction.

The curved shape of the fastener 110 of the first structural profile 10A, 12A of the figures allows for the rotation, i.e. pivoted motion, between the first structural profile and the second structural profile. The rotation occurs around a pivot point formed by the curved shape. The fastener 110 of the first structural profile 10A, 12A is a protrusion or a rounded protrusion. The fastener 110 tapers off towards the tip. The widest point of the fastener 110 is located at the base of the fastener 110 for forming a sturdy structure. Said curved shape can be round when viewed in the cross section of the first structural profile. It should be mentioned that the fastener 110 of the first structural profile can alternatively be an indentation.

The curved shape of the counter-fastener 120 of the second structural profile 10B, 12B of the figures allows for the rotation, i.e. pivoted motion, between the first structural profile and the second structural profile. The curved shape of the counter-fastener of the second structural profile corresponds to the curved shape of the fastener of the first structural profile. The rotation occurs around a pivot point formed by the curved shape. Said curved shape can be round when viewed in the cross section of the second structural profile. The counter-fastener 120 of the second structural profile 10B, 12B is an indentation or a rounded indentation. The counter-fastener 120 corresponds to the fastener of the first structural profile. Said indentation tapers off towards the bottom. It should be mentioned that the counter-fastener 120 of the second structural profile can alternatively be a protrusion.

To the first structural profile 10A, 12A of the figures, it is possible to connect two second structural profiles 10B, 12B and, equivalently, to the second structural profile, it is possible to connect two first structural profiles. The first structural profile 10A, 12A comprises a counter-fastener 120 shaped from its outer wall 102 corresponding to the fastener 110 of the previous structural profile 10C, 12C, or in other words, the fastener of the third structural profile, which previous structural profile 10C, 12C can be the same profile as the second structural profile 10B, 12B. Equivalently, the second structural profile 10B, 12B comprises a fastener 110 shaped of its outer wall 102 for positioning the second structural profile 10B, 12B to the counter-fastener 120 of the following structural profile 10D, 12D, or in other words, the counter-fastener of the fourth structural profile, which following structural profile 10D, 12D can be the same profile as the first structural profile 10A, 12A.

The first structural profile 10A, 12A of the figures comprises a limiter 130 shaped from its outer wall 102 for limiting the rotation between the first structural profile 10A, 12A and the second structural profile 10B, 12B. In more detail, the first structural profile comprises two limiters 130 shaped from the outer wall 102. The limiter 130 is located next to said fastener 110. In more detail, said limiters 130 are located on both adjacent sides of the fastener 110 of the first structural profile. The limiter 130 can comprise a substantially straight section of the outer wall 102.

The second structural profile 10B, 12B of the figures comprises a counter-limiter 140 shaped from its outer wall 102. In more detail, the second structural profile comprises two counter-limiters 140 shaped from the outer wall. The counter-limiter 140 is located next to said counter-fastener 120. In more detail, said counter-limiters 140 are located on both adjacent sides of the counter-fastener 120 of the second structural profile. The counter-limiter 140 can correspond to the shape of the limiter. The counter-limiter 140 can comprise a substantially straight section of the outer wall 102.

Furthermore, the counter-limited 140 is configured to extend against the limiter 130 of the first structural profile 10A, 12A in its first position. Additionally, the counter-limiter 140 is configured to be at a distance from the limiter of the first structural profile 10A, 12A in its second position. The rotation between the first structural profile 10A, 10A and the second structural profile 10B, 12B is configured to be e.g. less than 10 degrees, less than 8 degrees, less than 6 degrees, or less than 5 degrees. For clarity, it should be mentioned that in Figure 2, for instance, the counter-limiter 140 located above the counter-fastener of the second structural profile is rotated against the limiter 130 thus being in its first position, and the counter-limiter 140 located below said counter-fastener is at a distance from the limiter 130 thus being in its second position.

The first structural profile 10A, 12A of the figures comprises a welding groove half 150 shaped from its outer wall 102 for forming a welding groove 20 between the first structural profile 10A, 12A and the second structural profile 10B, 12B. In more detail, the first structural profile comprises two welding groove halves 150 shaped from the outer wall 102. The welding groove half 150 is located next to said fastener 110. In more detail, said welding groove halves 150 are located on both adjacent sides of the fastener 110 of the first structural profile.

The second structural profile 10B, 12B of the figures comprises a welding groove counter-half 160 shaped from its outer wall 102 for forming a welding groove 20 between the first structural profile 10A, 12A and the second structural profile 10B, 12B. In more detail, the second structural profile comprises two welding groove counter-halves 160 shaped from the outer wall 102. The welding groove counter-half 160 is located next to said counter-fastener 120. In more detail, said welding groove counter-halves 160 are located on both adjacent sides of the counter-fastener 120 of the second structural profile.

Furthermore, the welding groove half 150 of the first structural profile comprises a root section 150A which, in the embodiment of the figures, is simultaneously the section of the outer wall 102 which forms the limiter 130. Additionally, the welding groove counter-half 160 of the second structural profile comprises a root section 160A which, in the embodiment of the figures, is the section of the outer wall 102 which forms the counter-limiter 140.

In addition, the welding groove half 150 of the first structural profile 10A, 12A comprises a rounding 150B at a distance from the fastener 110 for forming a welding groove 20 between the first structural profile 10A, 12A and the second structural profile 10B, 12B when the first structural profile 10A, 12A and the second structural profile 10B, 12B are rotated to their extreme position. In more detail, the welding groove halves comprise the rounding 150B at a distance from the fastener. The above-mentioned allows for forming an appropriate fastening between the first structural profile and the second structural profile when they are rotated to their extreme position.

In addition, the welding groove counter-half 160 of the second structural profile 10B, 12B comprises a rounding 160B at a distance from the counter-fastener 120 for forming a welding groove 20 between the first structural profile 10A, 12A and the second structural profile 10B, 12B when the first structural profile 10A, 12A and the second structural profile 10B, 12B are rotated to their extreme position. In more detail, said welding groove counter-halves 160 comprise the rounding 160B at a distance from the counter-fastener. The above-mentioned allows for forming an appropriate fastening between the first structural profile and the second structural profile when they are rotated to their extreme position.

For clarity, it should be mentioned that the curved shape of the fastener 110 of the first structural profile 10A, 12A and the curved shape of the counter-fastener 120 of the second structural profile 10B, 12B are shaped such that the first structural profile and the second structural profile rotate in relation to each other before welding the first structural profile and the second structural profile fast together. The structural profile joint comprises a weld between the first structural profile and the second structural profile thus preventing the rotation between the first structural profile and the second structural profile. The weld is arranged to said weld groove 20 formed by the first structural profile and the second structural profile.

The first structural profile 10A, 12A of the figures comprises an inner wall 104 forming an inner space 106. The inner space can be configured to be empty, due to which, it is possible to achieve e.g. a light but durable profile structure, or the inner space can be filled with a filler which is described in more detail later. A gap between the inner wall and the outer wall of the first structural profile forms the first structural profile its wall thickness. The wall thickness can be standard being e.g. 2-30 mm, 3-25 mm, 4-20 mm, 5-15 mm, or 6-10 mm. The wall thickness can be varying. The wall thickness is typically selected based on the requirements set for the structure.

The second structural profile 10B, 12B of the figures comprises an inner wall 104 forming an inner space 106. The inner space can be configured to be empty, due to which, it is possible to achieve e.g. a light but durable profile structure, or the inner space can be filled with a filler which is described in more detail later. A gap between the inner wall and the outer wall of the first structural profile forms the first structural profile its wall thickness. The wall thickness can be standard being e.g. 2-30 mm, 3-25 mm, 4-20 mm, 5-15 mm, or 6-10 mm. The wall thickness can be varying. The wall thickness is typically selected based on the requirements set for the structure.

Furthermore, the inner space between the first structural profile and/or the second structural profile can be configured to be filled with a filler, due to which, it is possible to affect the characteristics of the structure being formed, such as its thermal insulation, durability and/or characteristic frequencies. The filler can be e.g. one of the following: concrete, fibrous concrete, foam and/or sand.

Additionally, the inner space between the first structural profile and/or the second structural profile can be configured to be filled with liquid, due to which, it is possible to convey liquid via the inner space of the first structural profile and/or the second structural profile. The liquid can be e.g. heat-exchange liquid, such as cooling liquid or heating liquid, by means of which, thermal energy can be conveyed to a structure being formed, such as e.g. a container.

The first structural profile 10A, 12A of the figures is a quadrangular profile. The quadrangular profile can be a square profile. The first structural profile 10A, 12A comprises a first side S1 and a second side S2 opposite it. The fastener of the first structural profile 10A, 12A is located on the first side S1. Furthermore, the first structural profile 10A,12A comprises a third side S3 between the first side S1 and the second side S2 and a fourth side S4 located opposite to it. The outer walls 102 of the third side S3 and the fourth side S4 are straight, whereby e.g. said third side S3 and/or fourth side S4 can be preferably installed against the end of the structure being formed, such as e.g. a container, thus minimizing air gaps possibly existing between the side and the end of the container. The counter-fastener 120 of the first structural profile is located on the second side S2. The adjacent sides are at an angle in relation to each other, thus forming corners. The quadrangular profile comprises four corners, which adjacent corners can be at a substantially same distance from each other, whereby the quadrangular profile is a square profile.

The second structural profile 10B, 12B of the figures is a quadrangular profile. The quadrangular profile can be a square profile. The second structural profile comprises a first side and a second side opposite to it wherein, for clarity, said sides of the second structural profile are not shown by designations in the figures. The counter-fastener of the second structural profile is located on the second side. Furthermore, the second structural profile comprises a third side between the first side and the second side and a fourth side located opposite to it. The outer walls of the third side and the fourth side are straight. The fastener of the second structural profile is located on the first side. The adjacent sides are at an angle in relation to each other, thus forming corners. The quadrangular profile comprises four corners, which adjacent corners can be at a substantially same distance from each other, whereby the quadrangular profile is a square profile.

The first structural profile 10A, 12A of the figures comprises an opening 170 for forming a flow connection between the first structural profile and the second structural profile, which opening is shown in the figures schematically with dashed lines. The first structural profile 10A, 12A can comprise several of said openings 170. The openings can be located e.g. close to the end or ends of the first structural profile. The opening 170 of the first structural profile is located on its first side S1. In more detail, the opening 170 of the first structural profile is located in the fastener 110 but the opening can be alternatively or additionally located e.g. in the limiter 130. The opening 170 can be e.g. a round through-hole, or the opening can be a specifically shaped opening going through the structural profile. Said opening 170 allows for e.g. the conveyance of heat-exchange liquid between the first structural profile and the second structural profile. Said opening 170 allows for e.g. the setting of fibrous concrete between the first structural profile and the second structural profile.

The second structural profile 10A, 12A of the figures comprises a counter-opening 180 for forming a flow connection between the first structural profile and the second structural profile, which opening is shown in the figures schematically with dashed lines. The second structural profile 10B, 12B can comprise several of said counter-openings 180. The counter-opening 180 of the second structural profile corresponds to the opening 170 of the first structural profile. The counter-opening 180 of the second structural profile is located on its second side S2. In more detail, the counter-opening 180 of the second structural profile is located in the counter-fastener 120 but the counter-opening can be alternatively or additionally located in e.g. the counter-limiter. The counter-opening 180 can be e.g. a round through-hole, or the opening can be a specifically shaped opening going through the structural profile, wherein the size of the opening is determined such that flow connection remains when the first structural profile and the second structural profile are rotated in relation to each other. Said counter-opening 180 allows for e.g. the conveyance of heat-exchange liquid between the first structural profile and the second structural profile. Said counter-opening 180 allows for e.g. the setting of fibrous concrete between the first structural profile and the second structural profile.

Furthermore, said first structural profile comprises a counter-opening 180 which is located in the counter-fastener 120 of the first structural profile. Additionally, the second structural profile comprises an opening 170 which is located in the fastener 110 of the second structural profile.

The first structural profile 10A, 12A of the figures is open of its ends for further forming a flow connection with structural profiles to be installed at the end or ends of the first structural profile. The end of the first structural profile can be closed for preventing the flow connection. Equivalently, the second structural profile 10B, 12B is open of its ends for further forming a flow connection with structural profiles to be installed at the end or ends of the second structural profile. The end of the second structural profile can be closed for preventing the flow connection.

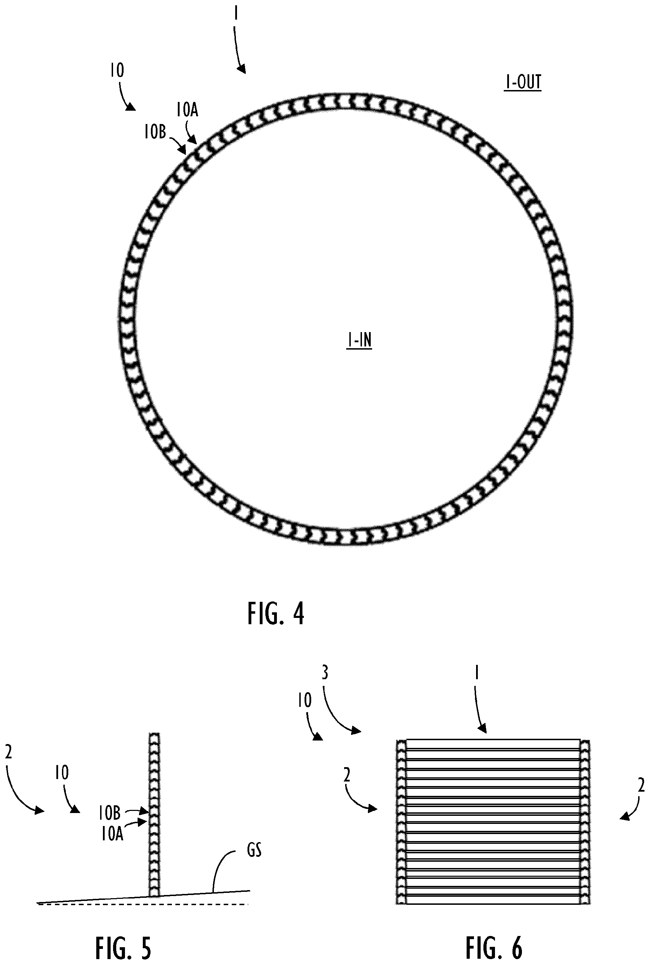

Figure 4 shows the structural profile joint 10 of Figure 2 arranged as a pipe 1. An advantage of the pipe 1 arranged from the structural profile joint 10 is that the first structural profile and the second structural profile are positioned to each other, due to the fastener and the counter-fastener, substantially parallel but allowing for the rotation of the structural profile in relation to each other.

Furthermore, the pipe 1 can be formed e.g. as follows. The first structural profile is positioned on e.g. a surface. The second structural profile is positioned on the first structural profile such that the fastener of the first structural profile and the counter-fastener of the second structural profile are connected to each other. The angle, or in other words, the rotation of the second structural profile and the first structural profile is adjusted by rotating the second structural profile in relation to the first structural profile, wherein said fastener and counter-fastener prevent unintentional sliding between the structural profiles. Furthermore, a specific number of first structural profiles and second structural profiles are connected alternately to each other for forming a pipe. For forming a pipe, the first structural profiles and the second structural profiles can be positioned in relation to each other by using, if necessary, e.g. inner or outer support rings and/or for forming a pipe the first structural profiles and the second structural profile can be tag welded before the actual welding. In the tag welding, the structural profiles are attached to each other by short tag welds, wherein the tag welds keep the structural profiles in an accurate position in relation to each other during the actual welding. The structural profiles can be welded fast together from inside 1-IN of the pipe and/or from outside 1-OUT of the pipe. The inner spaces 106 of the structural profiles can be filled with a filler. The inner spaces 106 of the structural profiles can be filled with heat-exchange liquid. The provided pipe has the following advantages, for instance: the structural profiles can be easily installed to each other at the installation work site because the structural profiles preserve their longitudinal position in relation to each other during the positioning, and the need for different structural profiles is minor because different sizes of pipes can be formed of the same structural profile.

Figure 5 shows the structural profile joint 10 of Figure 2 arranged as a wall 2. An advantage of the wall 2 arranged from the structural profile joint 10 is that the first structural profile and the second structural profile are positioned to each other, due to the fastener and the counter-fastener, substantially parallel but allowing for the rotation of the structural profile in relation to each other. Said allowance of rotation assists in considering e.g. a tilted ground surface GS. Said allowance of rotation assists in connecting structural profiles of varying dimensional tolerances to each other.

Furthermore, the wall 2 can be formed e.g. as follows. The structural profiles are transported to an installation site, such as e.g. a work site. The first structural profile is positioned on e.g. a surface which can be e.g. the ground surface GS. The second structural profile is positioned on the first structural profile such that the fastener of the first structural profile and the counter-fastener of the second structural profile are connected to each other. The angle, or in other words, the rotation of the second structural profile and the first structural profile is adjusted by rotating the second structural profile in relation to the first structural profile, wherein said fastener and counter-fastener prevent unintentional sliding between the structural profiles. Said allowance of rotation enables the connection of structural profiles e.g. parallel in relation to the gravitational axis. Furthermore, a specific number of first structural profiles and second structural profiles are connected alternately to each other for forming a wall. For forming a wall, the first structural profiles and the second structural profiles can be tag welded before the actual welding. In the tag welding, the structural profiles are attached to each other by short tag welds, wherein the tag welds keep the structural profiles in an accurate position in relation to each other during the actual welding. The structural profiles can be welded fast to each other from two opposite sides or alternatively from one side of the wall. The inner spaces 102 of the structural profiles can be filled with a filler. The inner spaces 102 of the structural profiles can be filled with heat-exchange liquid. The provided wall has the following advantages, for instance: the structural profiles can be easily installed to each other at the installation work site because the structural profiles preserve their longitudinal position in relation to each other during the positioning, and the need for different structural profiles is minor because different sizes of pipes can be formed of the same structural profile.

Figure 6 shows the structural profile joint 10 of Figure 2 arranged as a container 3. An advantage of the container 3 arranged from the structural profile joint 10 is that the first structural profile and the second structural profile are positioned to each other, due to the fastener and the counter-fastener, substantially parallel but allowing for the rotation of the structural profile in relation to each other. Said allowance of rotation assists in considering e.g. a tilted ground surface GS. Said allowance of rotation assists in connecting structural profiles of varying dimensional tolerances to each other.

Furthermore, the container 3 can be formed e.g. as follows. A cylindrical frame is formed for the container. The cylindrical frame can be e.g. said pipe 1. Two walls 2 are formed for the container. The walls are arranged at two opposite ends of the cylindrical frame, such as e.g. a pipe 1, which walls can be arranged at the two opposite ends of the cylindrical frame in the assembly step of the cylindrical frame or after it.

According to an embodiment, the structural profile joint 10 can be arranged as a specific structure where an angle between the structural profiles connected to each other is different. Therefore, the structural profile joint can form e.g. a structure resembling the letter S. It is possible to implement a specific structure e.g. by tag welding the structural profiles to each other before the actual welding.

The structural profiles can be welded fast together. Like mentioned above, the welding locks the rotation between the first structural profile and the second structural profile. Furthermore, welding can be used to perform a closed connection between the first structural profile and the second structural profile, which connection prevents the leaking of e.g. liquid or gas between the first structural profile and the second structural profile.

Those skilled in the art will find it obvious that, as technology advances, the basic idea of the invention may be implemented in many different ways. The invention and its embodiments are thus not restricted to the above-described examples but may vary within the scope of the claims.

## Claims

1. A structural profile joint (10) comprising
a first structural profile (10A, 12A) which comprises an outer wall (102) and plastic as material, and
a second structural profile (10B, 12B) to be fastened to the first structural profile (10A, 12A), which second structural profile (10B, 12B) comprises an outer wall 102 and plastic as material, wherein
first structural profile (10A, 12A) of the structural profile joint (10) comprises a fastener (110) shaped from its outer wall (102) and the second structural profile (10B, 12B) of the structural profile joint (10) comprises a counter-fastener (120) shaped from its outer wall (102) corresponding to the fastener (110) of the first structural profile (10A, 12A) for positioning the first structural profile (10A, 12A) and the second structural profile (10B, 12B) in relation to each other,
the fastener (110) of the first structural profile (10A, 12A) comprises a curved shape, and the counter-fastener (120) of the second structural profile (10B, 12B) comprises a curved shape allowing for the rotation between the first structural profile (10A, 12A) and the second structural profile (10B, 12B), and wherein
the first structural profile (10A, 12A) and the second structural profile (10B, 12B) are configured to be welded fast together for locking the rotation between the first structural profile (10A, 12A) and the second structural profile (10B, 12B), **characterized in that**
the fastener (110) of the first structural profile (10A, 12A) is a protrusion, wherein the fastener (110) tapers off towards the tip and wherein the widest point of the fastener (110) is located at the base of the fastener (110) for forming a sturdy structure, and that
the counter-fastener (120) of the second structural profile (10B, 12B) is an indentation corresponding to the fastener (110) of the first structural profile (10A, 12A).

2. A structural profile joint (10) according to claim 1, **characterized in that**
the first structural profile (10A, 12A) comprises a limiter (130) shaped from its outer wall (102) for limiting the rotation between the first structural profile (10A, 12A) and the second structural profile (10B, 12B), and that
the second structural profile (10B,12B) comprises a counter-limiter (140) shaped from its outer wall (102), which counter-limiter (140) is configured to extend against the limiter (130) of the first structural profile (10A,12A) in its first position, and which counter-limiter (140) is configured to be at a distance from the limiter (130) of the first structural profile (10A, 12A) in its second position.

3. A structural profile joint (10) according to claim 2, **characterized in that** the rotation between the first structural profile (10A, 12A) and the second structural profile (10B, 12B) is configured to be less than 6 degrees for assisting the positioning.

4. A structural profile joint (10) according to any one of the preceding claims, **characterized in that**
the first structural profile (10A,12A) comprises a welding groove half (150) shaped from its outer wall (102), and the second structural profile (10B,12B) comprises a welding groove counter-half (160) shaped from its outer wall (102) for forming a welding groove (20) between the first structural profile (10A, 12A) and the second structural profile (10B, 12B).

5. A structural profile joint (10) according to claim 4, **characterized in that**
the welding groove half (150) of the first structural profile (10A, 12A) comprises a rounding (150B) at a distance from the fastener (110), and the welding groove counter-half (160) of the second structural profile (10B, 12B) comprises a rounding (160B) at a distance from the counter-fastener (120) for forming a welding groove (20) between the first structural profile (10A, 12A) and the second structural profile (10B, 12B) when the first structural profile (10A, 12A) and the second structural profile (10B, 12B) are rotated to their extreme position.

6. A structural profile joint (10) according to any one of the preceding claims, **characterized in that**
the first structural profile (10A, 12A) comprises an inner wall (104) thus forming an inner space (106) which is configured to be filled with a filler,
the second structural profile (10B, 12B) comprises an inner wall (104) thus forming an inner space (106) which is configured to be filled with a filler, and that
the filler is one of the following: concrete, fibrous concrete, foam and/or sand.

7. A structural profile joint (10) according to any one of the preceding claims, **characterized in that**
the first structural profile (10A,12A) comprises a counter-fastener (120) shaped from its outer wall (102) corresponding to the fastener (110) of the preceding structural profile (10C, 12C), and that
the second structural profile (10B, 12B) comprises a fastener (110) shaped from its outer wall (102) for positioning the second structural profile (10B, 12B) to the following one.

8. A structural profile joint (10) according to any one of the preceding claims, **characterized in that** the first structural profile (10A, 12A) is a quadrangular profile and that the second structural profile (10B, 12B) is a quadrangular profile.

9. A structural profile joint (10) according to any one of the preceding claims, **characterized in that** the first structural profile (10A) and the second structural profile (10B) are identical of their appearance.

10. A structural profile joint (10) according to any one of the preceding claims, **characterized in that**
the first structural profile (10A, 12A) comprises an opening (170) which is located in the fastener (110) of the first structural profile (10A, 12A), and that
the second structural profile (10B, 12B) comprises a counter-opening (180) for forming a flow connection between the first structural profile and the second structural profile, which counter-opening (180) corresponds to the opening (170) of the first structural profile (10A, 12A).

11. A pipe (1) comprising several first structural profiles (10A, 10B) and second structural profiles (12A, 12B) of a structural profile joint (10) according to any one of claims 1-10 fastened to each other to form a pipe (1).

12. A pipe (1) according to claim 11, wherein an inner space (106) of the structural profile (10A, 10B, 12A, 12B) is filled with a filler which comprises one of the following: concrete, fibrous concrete, foam, or sand.

13. A pipe (1) according to claim 11, wherein an inner space (106) of the first structural profile (10A, 10B) or the second structural profile (12A, 12B) is filled with heat-exchange liquid.

14. A wall (2) comprising several first structural profiles (10A, 10B) and second structural profiles (12A, 12B) of a structural profile joint (10) according to any one of claims 1-10 fastened to each other to form a wall (2).

15. A container (3) comprising
a cylindrical frame and
walls (2) according to claim 14 connected at the opposite ends of the cylindrical frame.
